# EUROPEAN PATENT APPLICATION

(11) **EP 1 050 442 A1**
(43) Date of publication of application: **08.11.2000**
(21) Application number: 99201400.1
(22) Date of filing: 06.05.1999
(51) Int. Cl.: B60S 1/38

(54) **Process for manufacturing a windshield wiper blade**

(71) Applicant: Federal-Mogul S.A., 6790 Aubange (BE)
(72) Inventor: Orjela, Gurdev c/o Federal-Mogul S.A., 6790 Aubange (BE)
(74) Representative: Hooiveld, Arjen Jan Winfried

(57) **Abstract**

Process for manufacturing a windshield wiper blade at least substantially made of an elastomeric material, wherein a surface coating is applied to the wiper blade, characterized in that the surface coating is applied to a strip of starting material (1), wherein the strip (1) is cut in at least two parts along a wiping edge (6) intended to make contact with a windshield of a vehicle, one of said parts forming the wiper blade (7,8).

## Description

The invention relates to a process for manufacturing a windshield wiper blade at least substantially made of an elastically deformable material, wherein a surface coating is applied to the wiper blade.

Such a process is known from European patent publication no. 0 264 227 (Nippon Wiperblade Co.Ltd.). In accordance with this prior art document, a surface coating is deposited onto the surface of the wiper blade using plasma technology, wherein the surface coating is a polymer coating formed directly from a monomer gas by using plasma energy. The purpose of the surface coating is to improve the weather, wear and chemical resistance of the wiper blade, as well as to slow down the ageing process thereof.

A disadvantage of the process known from the above European patent publication is that the wiping edge of the wiper blade which is intended to make contact with the windshield of a vehicle is covered with said polymer surface coating, resulting in a reduced friction between the wiper blade and the windshield and thus in a detoriation of the wiping properties of the wiper blade.

It is the object of the present invention to improve the above known process for manufacturing a windshield wiper blade in the sense that, although a surface coating is applied to the surface thereof, excellent wiping properties of the wiper blade are achieved, and to that end a process for manufacturing a wiper blade as mentioned in the introduction according to the invention is characterized in that the surface coating is applied to a strip of starting material, wherein the strip is cut in at least two parts along a wiping edge which is intended to make contact with the windshield of a vehicle, one of said parts forming the wiper blade. As a result of the cutting operation, the strip of starting material, which is preferably made of an elastomeric material, is cut in two parts, one part forming the actual wiper blade covered with the surface coating, which comprises a wiping edge being not coated therewith and thus having excellent wiping properties, and the other part forming a rest part. This rest part could, for example, be disposed of in an environment-friendly manner, preferably in order to be processed for re-use.

In a preferred embodiment of the process according to the invention, the other part is provided with a profile. As it is of the utmost importance that cutting the strip of starting material takes place along a sharp and straight line, the other part is sufficiently stiff due to the presence of said profile in order to realize such a sharp and straight wiping edge. Said profile could also serve as gripping means for gripping the strip of starting material in a position in which said cutting could take place quickly and accurately.

In another preferred embodiment of the process according to the invention, the other part is formed by another wiper blade. In other words, the strip of starting material comprises two wiper blades moulded together, wherein by cutting said strip along a wiping edge two separate wiper blades are provided. When the strip is cut in two wiper blades with their respective wiping edges directed towards each other, two separately coated wiper blades are obtained, wherein each wiper blade has an uncoated wiping edge. When the strip is cut in two wiper blades, with the wiping edge of one of said wiper blades being directed towards the head of the other wiper blade, two separate, coated wiper blades are obtained, wherein only one wiper blade has an uncoated wiping edge. The other wiper blade then needs a further cutting operation.

In another preferred embodiment of the process according to the invention, the strip of starting material is made in one piece, using a compression moulding and/or an injection moulding and/or an extrusion technique.

In another preferred embodiment of the process according to the invention, the surface coating is applied by using plasma technology. In particular, the surface coating is a polymer coating formed directly from a monomer gas by using plasma energy. The low friction coating according to the invention is formed by applying electromagnetic energy to a monomer gas preferably containing a halogen group element, particularly: F₂, Cl₂, Br₂, CF₄ or C₃F₆ to form a plasma in atmospheric or preferably vacuum conditions. The wiper blade after forming and curing is subjected to this treatment either in batch form (for compression type process) or in line (extrusion process) in order to coat it.

Examples of the wiper blades made principally from natural rubber coated in plasma from CF₄ using an in line atmospheric process and a batch low vacuum process are given below with their performance on critical properties of wipe and friction. The results from a traditional processs are also given for comparison.

| Type | Wipe Quality* | Dry Friction** | Wet Friction** |
|---|---|---|---|
| Traditional | 9 | 0,9 | 0,3 |
| batch/vacuum plasma | 9 | 0,8 | 0,3 |
| In-line atmospheric plasma | 9 | 0,9 | 0,3 |

| | | | |
|---|---|---|---|
| *Rating: 10 = perfect wipe, 1=very poor wipe according to ASTM, | | | |
| **friction coefficient | | | |

The invention also refers to a strip of starting material to be used in a process according to the invention.

The invention will be elucidated with reference to the accompanying drawings, in which
- figure 1 shows a schematic, perspective view of a strip of starting material consisting of four moulded-together wiper blades, wherein the wiping edge of a wiper blade is directed towards the head of another wiper blade;
- figure 2 corresponds to figure 1, with this difference that two wiper blades are moulded together, with their respective wiping edges being directed towards each other;
- figures 3 and 4 correspond to figure 2, on the understanding that four wiper blades are moulded together.

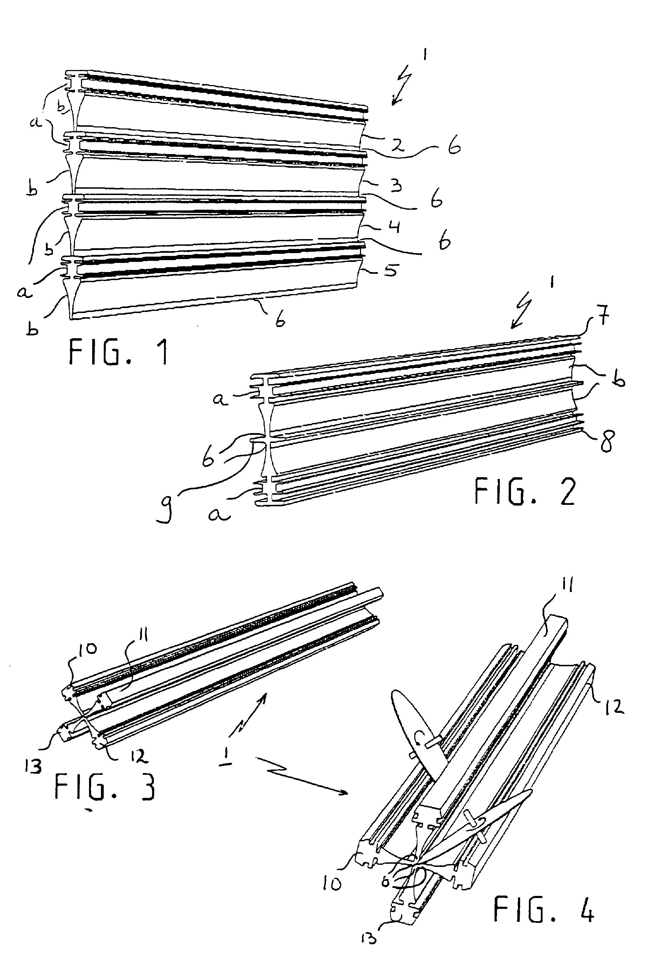

In figure 1 a strip of starting material 1 made of rubber is shown, which consists of four elastically deformable (rubber) wiper blades 2, 3, 4 and 5, each comprising an upper member or head a to be attached to a wiper arm assembly support (not shown), as well as a lower member or scraper b having a wiping edge 6 as a free edge, which is intended to make contact to a vehicle's windshield. The strip of starting material 1 is made by means of an extrusion process, wherein a polymer surface coating is directly deposited thereon from a monomer gas using plasma energy. Then the strip of starting material 1 is cut in four parts along the wiping edges 6, so that four separate wiper blades 2, 3, 4 and 5 are obtained. Each wiper blade 2, 3 and 4, although coated as a whole, has an uncoated wiping edge 6, except for wiper blade 5 which requires an additional cutting operation along its free edge in order to provide it with an uncoated wiping edge 6.

Figure 2 refers to two moulded-together wiper blades 7, 8 whose respective wiping edges 6 are directed to each other and as a whole form the strip of starting material 1. In order to prevent the strip of starting material 1 from deforming, particularly bending, after extrusion, a profile 9 is provided. The profile 9 being in one piece with the strip of starting material 1 and being moulded together with the wiper blades 7, 8 gives the strip of starting material 1 sufficient stiffness to accurately cut said strip along the wiping edges 6 into two separate, coated wiper blades 7, 8 having uncoated wiping edges 6, leaving the profile 9 as a rest part, which is to be processed further.

Figures 3 and 4 correspond to figure 2, wherein the strip of starting material 1 consists of four moulded-together wiper blades 10, 11, 12 and 13, whose respective wiping edges 6 are directed towards each other. Also in this case, said strip is cut by cutters 14 along the wiping edges 6 into four separate, coated wiper blades 10, 11, 12 and 13 provided with uncoated wiping edges 6.

## Claims

1. Process for manufacturing a windshield wiper blade at least substantially made of an elastically deformable material, wherein a surface coating is applied to the wiper blade, **characterized in that** the surface coating is applied to a strip of starting material, wherein the strip is cut in at least two parts along a wiping edge which is intended to make contact with the windshield of a vehicle, one of said parts forming the wiper blade.

2. Process according to claim 12, wherein the other part is provided with a profile.

3. Process according to claim 1 or 2, wherein the other part is formed by another wiper blade.

4. Process according to claim 3, wherein the strip is cut in two wiper blades whose respective wiping edges are directed towards each other.

5. Process according to claim 3, wherein the strip is cut in two wiper blades, with the wiping edge of one of said wiper blades being directed towards the head of the other wiper blade.

6. Process according to any one of the preceding claims 1-5, wherein the strip is made in one piece.

7. Process according to claim 6, wherein a compression moulding technique is used.

8. Process according to claim 6 or 7, wherein an injection moulding technique is used.

9. Process according to claim 6, 7 or 8, wherein an extrusion technique is used.

10. Process according to any one of the preceding claims 1-9, wherein the surface coating is applied by using plasma technology.

11. Process according to claim 10, wherein the surface coating is a polymer coating formed directly from a monomer gas by using plasma energy.

12. Strip of starting material to be used in a process according to any one of the preceding claims 1-11.
